# FASCICULE DE BREVET EUROPEEN

(11) **EP 2 184 205 B1**
(45) Date de publication et mention de la délivrance du brevet: **28.03.2012**
(21) Numéro de dépôt: 09174902.8
(22) Date de dépôt: 03.11.2009
(51) Int. Cl.: B60R 5/04, B62B 5/00, B62B 3/02

(54) **Chariot de courses pouvant être chargé plein dans un coffre de véhicule automobile**
Einkaufswagen, der in ein Fahrzeug verstaut werden kann
Shopping trolley which can be loaded into a vehicle

(30) Priorité: 06.11.2008 FR 0857544
(43) Date de publication de la demande: 12.05.2010
(73) Titulaire: Peugeot Citroën Automobiles SA, 78140 Vélizy-Villacoublay (FR)
(72) Inventeur: Cossais, Michèle, 78280, GUYANCOURT (FR); Dumur, Denis, Francis, 78990, ELANCOURT (FR); Neumann, Grégory, 57150, CREUTZWALD (FR)

(56) Documents cités:
- WO-A-2005/028277
- DE-A1-102005 049 421
- US-A1- 2002 149 176

## Description

La présente invention concerne un chariot de courses pouvant être chargé plein dans un coffre de véhicule automobile. Elle concerne également un véhicule automobile, équipé d'un tel chariot.

C'est une habitude qui se généralise peu à peu de faire ses courses dans des supermarchés, en laissant son véhicule automobile sur le parking du magasin et en utilisant des chariots qui sont, le plus souvent, consignés et rendus disponibles avec une pièce de monnaie. Les marchandises sont mises dans des sacs plastiques au passage à la caisse, lesquels sont déchargés un à un dans le coffre du véhicule. Le chariot vide est ensuite ramené pour être déconsigné. Une fois arrivé à la maison, l'utilisateur pose les marchandises afin de pouvoir ouvrir les portes, et il fait plusieurs voyages pour ranger les marchandises.

Toutes ces manipulations de transfert liées au chargement et au déchargement des sacs du chariot vers le coffre du véhicule, puis du coffre vers le domicile, font perdre du temps, sont pénibles et représentent une véritable corvée. De surcroît, le dos est fortement sollicité lorsqu'il faut atteindre les sacs au fond du chariot ou soulever des charges lourdes.

De plus, l'utilisation de petits sacs plastiques tend à disparaître parce qu'elle n'est pas favorable au développement durable. Les petits sacs sont maintenant remplacés par des grands sacs, qui sont plus écologiques parce que recyclables, mais qui sont aussi plus lourds lorsqu'ils sont remplis, ce qui rend encore plus pénible lesdites manipulations.

C'est la raison pour laquelle ont déjà été développés des petits chariots, accessoires de véhicules automobiles, permettant de transporter des objets en les faisant rouler, au lieu de les porter. De tels petits chariots peuvent être « pliables » pour être rangés dans le coffre du véhicule. Ils présentent, toutefois, l'inconvénient de ne pas apporter une solution à la problématique d'avoir à décharger et recharger plusieurs fois, c'est-à-dire de transférer les marchandises d'un point à un autre de façon répétée. De plus, ces petits chariots remplis doivent être soulevés pour être introduits dans le coffre, ou bien être vidés au préalable, ce qui représente, dans les deux cas, des efforts importants.

D'autres solutions sont connues de l'art antérieur.

On connaît, par exemple, selon le document FR 2 880 606, un chariot à panier à pied unique qui se verrouille ou se déverrouille manuellement au centre de manière à être introduit, avec ou sans son contenu, dans un coffre de véhicule ou bien extrait de celui-ci. Le chariot est constitué de quatre parties amovibles, à savoir : un panier contenant les achats, un pied central unique, un socle constitué d'une pluralité de branches, et enfin un tube fileté à sa base ainsi que sur sa partie supérieure.

Le document FR 2 811 278 décrit un véhicule automobile du type comportant une partie d'extrémité formant coffre. Un élément de cette partie d'extrémité est mobile entre une position verrouillée au véhicule, dans laquelle l'élément est agencé sensiblement dans le prolongement de ladite partie formant coffre, et une position déverrouillée, dans laquelle ledit élément est mobile sur ses propres roues indépendamment du véhicule. Cet élément mobile se présente sous la forme d'un bac sensiblement parallélépipédique à couvercle rabattable, ouvert vers le haut, équipé de deux roues et d'une poignée de manoeuvre.

Un autre exemple est connu par le document FR 2 756 242, qui décrit un chariot destiné aux courses dans les magasins, chargeable plein et sans efforts dans un coffre de véhicule. Le chariot comprend un panier et un support à roulettes. Le support à roulettes est démontable et repliable dans le coffre de la voiture lorsqu'il est déboîté de longerons à roulettes et de bras supports de panier. Le panier est mobile par rapport au support et animé d'un mouvement de rotation par des biellettes qui constituent deux parallélogrammes déformables. La rotation de la manivelle transmet le mouvement jusqu'à deux réducteurs extra plats à chaînes situés de part et d'autre du panier.

Enfin, à titre d'exemple également, le document EP 1 180 463 décrit un chariot destiné aux achats dans un magasin, qui peut être introduit sans efforts dans le coffre d'un véhicule automobile. Ce chariot est constitué essentiellement d'un panier et d'une structure qui sont repliables au moyen de charnières et d'axes situés dans les parois du panier et dans les pièces formant la structure, de telle sorte que le chariot peut être rangé dans une position repliée, par conséquent compacte.

Les documents WO 2005/028277 et US 2002/0149176 décrivent un chariot de courses muni de pieds télescopiques.

Le but de la présente invention est de fournir un chariot de courses, de type chariot de libre service, pouvant être chargé plein dans un coffre de véhicule automobile, qui permette de transporter des achats du supermarché jusque chez soi sans avoir à transférer ces achats placés dans des sacs du chariot vers le coffre du véhicule, puis du coffre vers chez soi.

Un autre but de la présente invention est de fournir un tel chariot, qui soit tel que les achats restent dans le chariot et dans les sacs de la caisse du supermarché jusqu'à leur place de rangement au domicile.

Un autre but de la présente invention est de fournir un tel chariot, qui permette de diminuer le temps passé au supermarché et le temps passé en transport des achats du véhicule au domicile, et qui permette aussi de diminuer les efforts habituellement faits au cours de ces transferts et manipulations.

Enfin, c'est également un but de la présente invention de fournir un tel chariot, qui constitue un accessoire valorisant le véhicule automobile, qui soit robuste, de conception et de réalisation simple, de manipulation aisée, et qui soit économique.

Pour parvenir à ces buts, la présente invention a pour objet un chariot de courses selon la revendication 1.

Ce moyen de levage et de descente de l'armature supérieure par rapport au socle est, de préférence, constitué par un pied télescopique sous la forme d'un vérin fluidique, en particulier d'un vérin pneumatique.

Selon un mode avantageux de réalisation de l'invention, l'armature supérieure comprend une poignée permettant de pousser le chariot et d'actionner le vérin fluidique pour le déploiement de l'armature ou l'escamotage du socle.

Selon un mode préféré de réalisation de l'invention, l'armature supérieure est entièrement pliable, de façon à diminuer l'encombrement du chariot dans le coffre du véhicule. A cette fin, par exemple, les flans verticaux de l'armature supérieure peuvent être articulés sensiblement à mi-hauteur par le moyen de charnières, de façon à permettre le pliage de l'armature supérieure.

Le contenant peut être réalisé en matériau souple.

Le contenant peut être réalisé dans un tissu résistant et suffisamment poreux pour faciliter l'évacuation des saletés qui pourraient s'accumuler au fond du contenant.

Le socle est monté, de préférence, sur 4 ou 5 roues multidirectionnelles, de façon à rendre le chariot stable.

Selon un mode préféré de réalisation de l'invention également, pour déclencher l'escamotage du socle et faire rouler l'armature supérieure dans le coffre, il est prévu un mécanisme de roues secondaires, situé sous le fond de l'armature supérieure.

Ce mécanisme de roues secondaires peut avantageusement servir aussi à déclencher un cran de sécurité qui provoque l'escamotage automatique sur action de l'utilisateur.

Il peut être prévu un amortisseur dans le socle, de façon à contribuer au confort de manipulation du chariot.

Selon un mode particulièrement avantageux de réalisation de l'invention, des crochets de fixation peuvent être prévus sur l'armature supérieure pour maintenir des sacs accessoires en position d'ouverture afin de pouvoir y déposer les achats effectués.

En variante, lorsqu'il est fait usage de sacs de supermarché, des pinces de fixation peuvent être prévues, chaque pince de fixation ayant une extrémité fixée sur le bord supérieur d'un sac de supermarché et l'autre extrémité fixée à un crochet de fixation.

La présente invention a également pour objet un véhicule automobile, qui comporte un chariot de courses conforme à celui décrit ci-dessus dans ses grandes lignes.

De manière préférentielle, le coffre de ce véhicule présente un fond inférieur et un fond supérieur, le fond supérieur comportant une rainure permettant de loger l'axe télescopique du vérin tandis que le socle et les roues sont rangées dans le fond inférieur.

De plus, il peut être prévu un ancrage à l'avant de l'armature supérieure pour le maintien du chariot selon la direction longitudinale du véhicule.

D'autres buts, avantages et caractéristiques de l'invention apparaîtront dans la description qui suit de modes de réalisation préférés, non limitatifs de l'objet et de la portée de la présente demande de brevet, accompagnée de dessins dans lesquels :
- la figure 1 est une vue en perspective d'un exemple de réalisation de chariot libre-service, selon la présente invention,
- la figure 2 est une vue de dessous, en perspective, du chariot de la figure 1, en position repliée de son contenant,
- la figure 3 est une vue en perspective d'un crochet de fixation de sacs, monté sur une glissière d'un chariot selon la présente invention,
- la figure 4 est une vue en perspective d'un sac avec une anse de mise en position dans le chariot de l'invention,
- la figure 5 est une vue en perspective, agrandie, de la partie supérieure d'un sac, montrant le moyen de fixation du sac sur le chariot de l'invention,
- la figure 6 est une vue en perspective d'une pince de fixation se fixant par une extrémité sur le bord supérieur d'un sac de supermarché et destinée à s'harnacher, par l'autre extrémité, au crochet de fixation de la figure 3,
- la figure 7 est un schéma représentant la cinématique de déploiement du chariot de l'invention,
- la figure 8 est un schéma représentant le chariot de l'invention, qui est rangé dans le coffre du véhicule et dont le socle est en position escamotée,
- les figures 9A et 9B sont des schémas représentant, en vue frontale et en vue de dessus respectivement, une variante de la cinématique de déploiement du chariot de l'invention, et
- la figure 10 est un schéma représentant le chariot des figures 9A et 9B, qui est rangé dans le coffre du véhicule et dont le socle est en position escamotée.

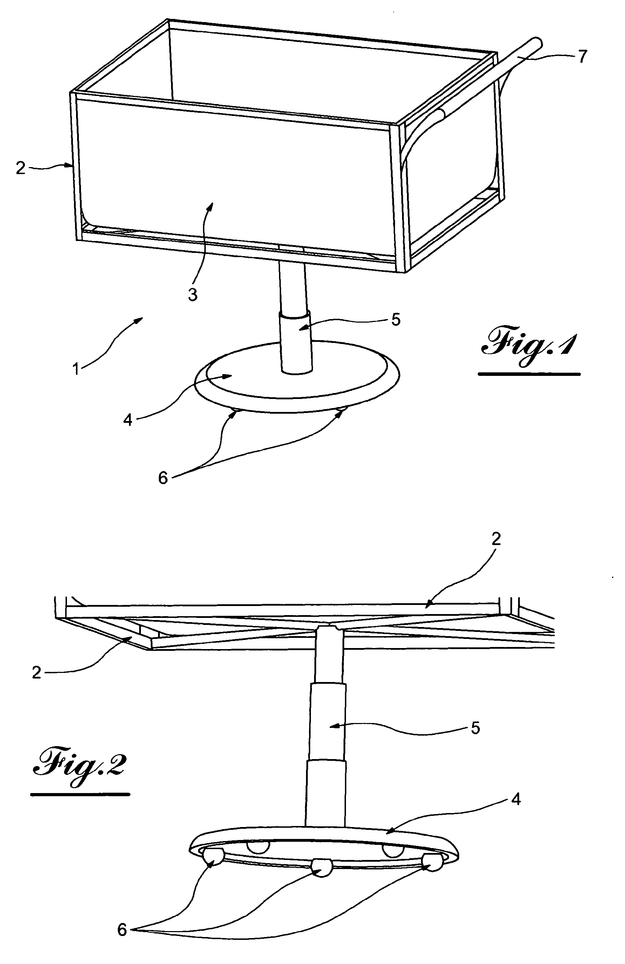

En référence au dessin de la figure 1, on a représenté un exemple de réalisation d'un chariot de courses, de référence générale 1, selon la présente invention. Le chariot 1 est composé d'une armature supérieure 2 supportant un contenant 3 en matériau résistant et souple et d'un soubassement constitué d'un socle 4 sur roues 6. L'armature supérieure 2 est reliée au socle 4 par l'intermédiaire d'un pied télescopique formé par un vérin 5, de type hydraulique ou pneumatique, qui permet de lever ou descendre l'armature supérieure 2 par rapport au socle 4, de façon à permettre le déploiement de l'armature supérieure 2 au-dessus du socle 4 en position d'utilisation du chariot et l'escamotage du socle 4 dans l'armature supérieure 2 en position de rangement du chariot dans le coffre (non représenté) d'un véhicule. L'armature supérieure 2 peut, de façon alternative (non représentée) être reliée au socle 4 par l'intermédiaire de plusieurs pieds télescopiques. Ainsi, le chariot 1, plein de marchandises, peut être rangé tel quel dans le coffre après le repliement du socle 4 sous l'armature 2. Le chariot 1 peut, ensuite, être ressorti du coffre d'un geste simple en déployant le vérin 5. Selon le principe de la présente invention, l'utilisateur n'a plus à charger et décharger son « caddy » de supermarché. De façon avantageuse, l'utilisateur peut, grâce au chariot de la présente invention, transporter directement et sans effort ses marchandises depuis les tapis des caisses du supermarché jusqu'aux placards de rangement de son domicile.

L'armature supérieure 2 peut être réalisée en métal ou en matière plastique. Le contenant 3, en matériau souple et résistant, est réalisé dans un matériau indéchirable, par exemple un tissu très résistant comme, par exemple, le tissu dans lequel sont fabriqués les sacs de gravats. De préférence également, le matériau constitutif du contenant 3 est un matériau dont la porosité pourra permettre l'évacuation facile des saletés qui peuvent s'accumuler au fond du contenant.

L'armature supérieure 2 comprend une poignée 7 permettant de pousser le chariot et d'actionner le vérin fluidique 5 pour le déploiement de ladite armature 2 ou l'escamotage du socle 4.

L'armature supérieure 2 est entièrement pliable, de façon à diminuer l'encombrement du chariot lorsqu'il est vide dans le coffre du véhicule. A cette fin, à titre d'exemple, les flans verticaux de l'armature supérieure 2 peuvent être articulés sensiblement à mi-hauteur par le moyen de charnières (non représentées), de type connu en soi, de façon à permettre le pliage de l'armature supérieure 2 en position repliée, représentée sur la figure 2. D'autres structures de l'armature et cinématiques de pliage de l'armature 2 en position de rangement, connues en soi, peuvent être utilisées.

Le socle 4 est conformé pour recevoir et transporter des objets encombrants ou lourds, par exemple des bouteilles ou des packs de boissons.

Le socle 4 est monté sur 4 ou 5 roues multidirectionnelles, référencées 6, de façon à rendre le chariot stable.

Pour déclencher l'escamotage du socle 4 et faire rouler l'armature supérieure 2 dans le coffre du véhicule, il est prévu un mécanisme de roues secondaires, situé sous le fond de l'armature supérieure 2. Le mécanisme de roues secondaires sert également à déclencher un cran de sécurité qui provoque l'escamotage automatique sur action de l'utilisateur, comme expliqué plus loin dans le présent texte.

Le socle 4 peut, de manière préférentielle, intégrer un amortisseur (non représenté), de façon à contribuer au confort de manipulation du chariot.

Le contenant 3 peut être rempli directement. En variante, il peut être compartimenté à l'aide des sacs réutilisables vendus en supermarché et utilisés actuellement dans les chariots classiques. Dans le cas où sont utilisés des sacs pour compartimenter le contenant, des crochets d'adaptation, accessoires du véhicule automobile, sont nécessaires pour maintenir les sacs.

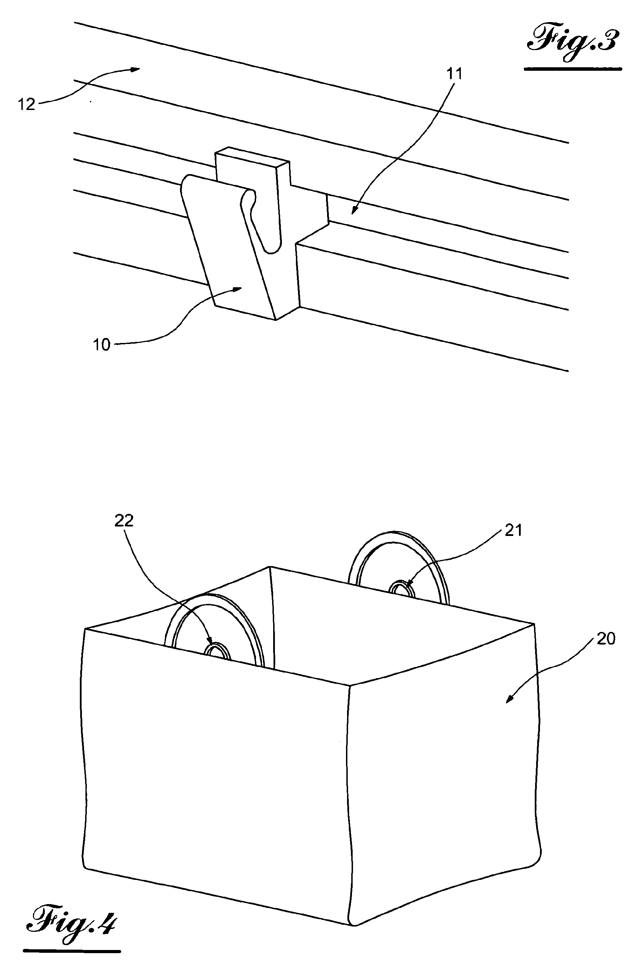

Selon un premier mode de réalisation, les sacs sont des accessoires fournis par le constructeur automobile en option avec le chariot libre-service. Dans ce cas, il est prévu des crochets de fixation, tels que celui représenté sur le dessin de la figure 3 et référencé 10, qui sont positionnés sur au moins une glissière 11 s'étendant sur un bord supérieur 12 de l'armature supérieure 2. De cette façon, les sacs peuvent être harnachés sur le bord supérieur 12 de ladite armature 2 pour être maintenus en position ouverte dans le contenant 3 et permettre, ainsi, d'y déposer directement les achats effectués.

Un exemple de réalisation d'un tel sac est représenté sur le dessin de la figure 4 et référencé 20. Le sac comporte des petites anses 21, 22, qui permettent la fixation du sac 20 sur le crochet de fixation 10.

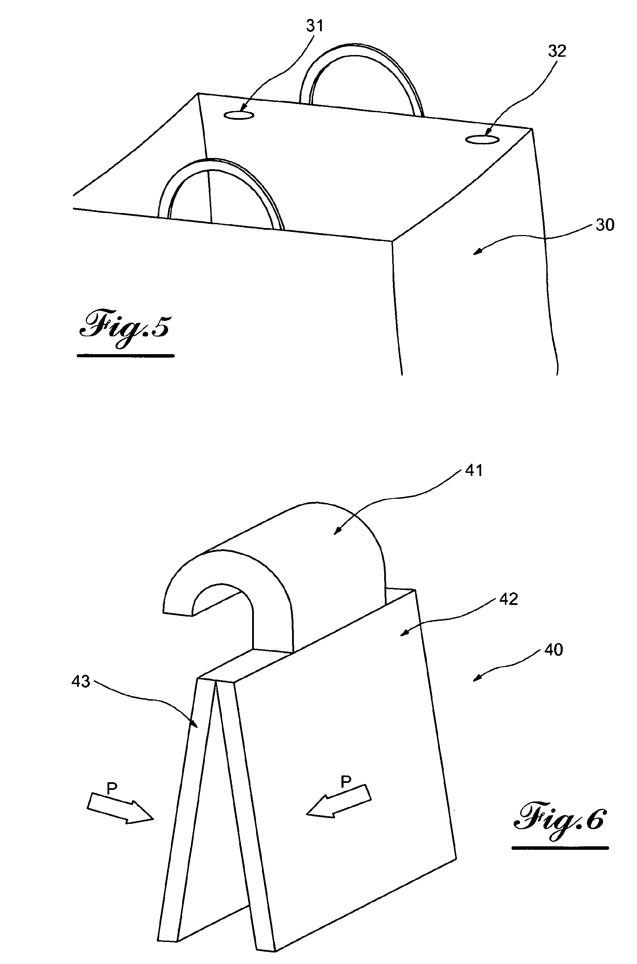

Une variante du sac 20 est représentée sur le dessin de la figure 5 et référencée 30. Le sac 30 comporte des oeillères 31, 32 prévues pour se fixer autour des crochets de fixation 10.

Cette solution des sacs accessoires, 20 ou 30, portés par des crochets de fixation 10 s'adapte particulièrement aux personnes qui ne peuvent pas transporter le chariot libre-service jusqu'aux placards ou lieux de stockage des achats, du fait, par exemple, de l'existence d'un escalier pour les personnes vivant en appartement. Ces personnes ont alors besoin des sacs intermédiaires 20, 30 pour transporter leurs achats du coffre du véhicule à leur cuisine, par exemple. De plus, les crochets de fixation 10 permettent de maintenir les sacs, 20 ou 30, dans le coffre, et empêchent le déversement de leur contenu dans le coffre.

Selon un autre mode de réalisation, les sacs sont des sacs fournis dans le commerce et utilisés sur le chariot libre-service de l'invention au moyen de pièces d'adaptation. Une telle pièce d'adaptation est représentée sur le dessin de la figure 6 et référencée 40. Cette pièce 40 se présente sous la forme d'une pince de fixation, qui se fixe, par son extrémité inférieure, sur le bord supérieur d'un sac de supermarché et qui est destinée à s'harnacher, par l'autre extrémité, référencée 41, au crochet de fixation 10. Les flèches « p » représentent le déplacement des deux parties 42 et 43 de la pièce d'adaptation 40 au cours du pincement.

Le chariot de l'invention présente deux modes d'utilisation :
- en mode « déployé », la poignée 7 (figure 1), qui permet de pousser le chariot, est située à hauteur conventionnelle, soit entre 850 mm et 950 mm de hauteur par rapport au sol,
- en mode « replié » ou « escamoté », le chariot reste à demeure ou non dans le coffre du véhicule, selon les besoins des utilisateurs.

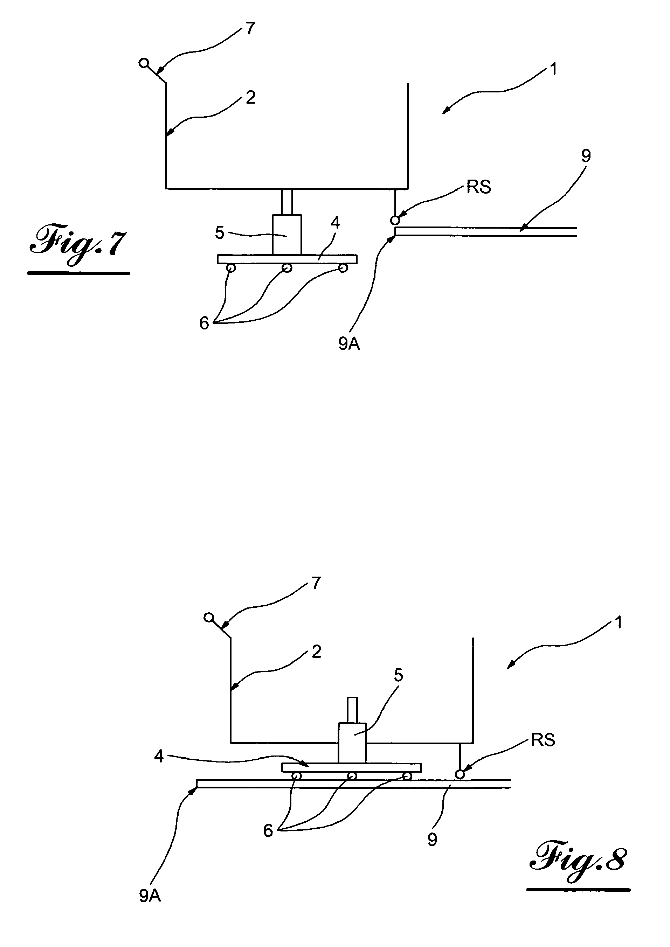

En référence au schéma de la figure 7, pour « sortir » ou « ranger » le chariot 1 dans le coffre du véhicule, il est possible d'escamoter le socle 4 du chariot selon une cinématique pouvant être automatisée ou assistée à l'aide d'un vérin pneumatique, de type comparable au vérin d'une chaise de bureau à hauteur réglable. La commande du vérin pneumatique 5 peut avantageusement être déportée sur la poignée 7 du chariot 1, de façon à faciliter son déploiement et son escamotage.

Cette cinématique de déploiement du chariot peut être la suivants :
- pour ranger le chariot 1 de l'invention dans le coffre 9 du véhicule, l'utilisateur avance le nez du chariot jusqu'au seuil 9A du coffre. Les roues secondaires RS situées immédiatement sous l'armature supérieure 2 entrent en contact avec le seuil 9A du coffre 9, ce qui permet de décharger le soubassement du chariot d'une partie de la masse du chargement et de déverrouiller le cran de sécurité. L'utilisateur peut alors actionner la commande d'escamotage du socle 4 située sur la poignée 7, de telle sorte que le socle 4 remonte à hauteur du seuil 9A du coffre 9 pour pouvoir ranger tout le chariot 1 à l'intérieur du coffre, comme cela est schématiquement représenté sur la figure 8.

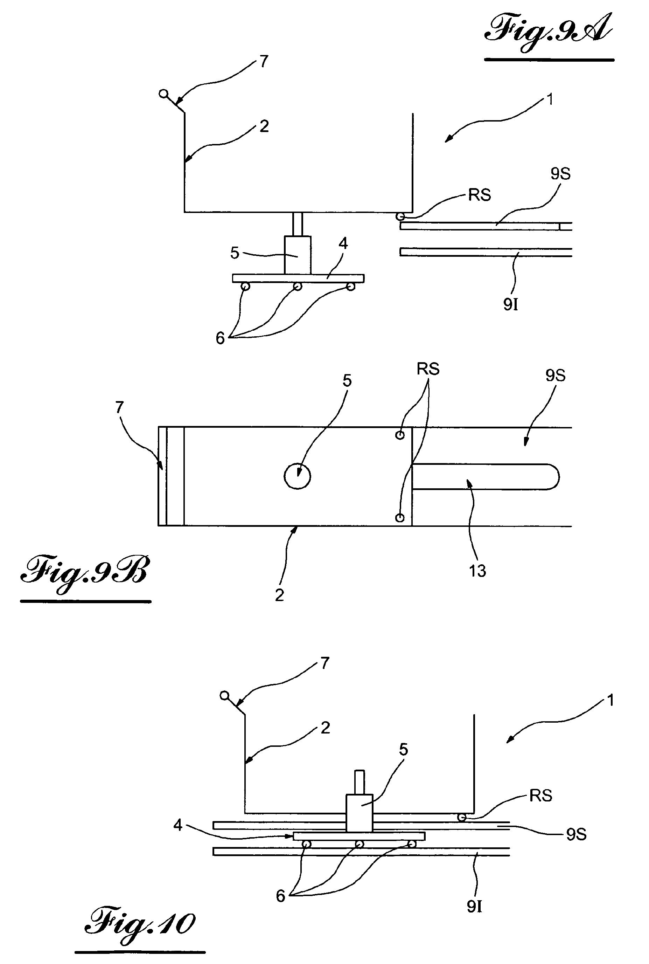

En référence au dessin des figures 9A, 9B et 10, on va décrire ci-dessous une variante du mode de rangement du chariot de l'invention dans le coffre d'un véhicule automobile.

Pour bloquer toute translation du chariot 1 en position dans le coffre du véhicule, le coffre du véhicule présente un fond inférieur 9I et un fond supérieur 9S. Le fond supérieur 9S comporte une rainure 13 qui permet de loger l'axe télescopique du moyen de levage et de descente 5 de l'armature, et le socle 4 et les roues 6 sont rangés dans le fond inférieur 9I.

De plus, il peut avantageusement être prévu un ancrage à l'avant de l'armature supérieure pour le maintien du chariot selon la direction longitudinale du véhicule (X).

On notera que, si le vérin 5 et le socle 4 présentent une masse importante, la structure tubulaire du chariot peut être allégée de manière à conserver une valeur acceptable à la masse totale du chariot.

Le chariot libre-service décrit ci-dessus présente de nombreux avantages, parmi lesquels les avantages principaux suivants :
- il permet à l'utilisateur de transporter ses achats du supermarché jusque chez lui sans avoir à transférer les sacs du « caddy » de supermarché vers le coffre de son véhicule, puis du coffre vers son domicile,
- de la caisse du supermarché au réfrigérateur, les denrées restent dans le chariot de l'invention et dans les grands sacs plastiques accessoires,
- il permet le compartimentage du coffre du véhicule, en remplaçant les caissettes en plastique qui sont souvent à demeure dans les coffres des utilisateurs,
- il permet de diminuer le temps passé au supermarché et le temps passé en transport des marchandises du véhicule au lieu de stockage des achats à domicile, en diminuant, de surcroît, les efforts,
- il est réalisé à partir d'un concept attrayant pour l'utilisateur, et peut, par conséquent, constituer une réelle incitation à l'acte d'achat d'un véhicule équipé d'un tel chariot.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Chariot de courses pouvant être chargé plein dans un coffre de véhicule automobile constitué par une armature supérieure (2) supportant un contenant (3) et un socle (4) sur roues (6), l'armature supérieure (2) étant reliée au socle (4) par l'intermédiaire d'un pied télescopique, de façon à permettre le déploiement de l'armature supérieure (2) au-dessus du socle (4) en position d'utilisation du chariot et l'escamotage du socle (4) dans l'armature (2) en position de rangement du chariot dans le coffre du véhicule **caractérisé en ce que** le socle (4) est conformé pour recevoir et transporter des objets encombrants ou lourds.

2. Chariot selon la revendication 1, **caractérisé en ce que** le moyen de levage et de descente de l'armature supérieure (2) par rapport au socle (4) est constitué par au moins un vérin (5) fluidique.

3. Chariot selon la revendication 2, **caractérisé en ce que** l'armature supérieure (2) comprend une poignée (7) permettant de pousser le chariot et d'actionner le vérin (5) fluidique pour le déploiement de ladite armature (2) ou l'escamotage du socle (4).

4. Chariot selon l'une quelconque des revendications 1 à 3, **caractérisé en ce que** l'armature supérieure (2) est entièrement pliable, de façon à diminuer l'encombrement du chariot dans le coffre du véhicule.

5. Chariot selon l'une quelconque des revendications précédentes, **caractérisé en ce que** les flans verticaux de l'armature supérieure (2) sont articulés sensiblement à mi-hauteur par le moyen de charnières, de façon à permettre le pliage de ladite armature supérieure (2).

6. Chariot selon l'une quelconque des revendications précédentes, **caractérisé en ce que** le contenant est réalisé en matériau souple.

7. Chariot selon l'une quelconque des revendications précédentes, **caractérisé en ce que** le contenant (3) est réalisé dans un tissu résistant et suffisamment poreux pour faciliter l'évacuation des saletés qui pourraient s'accumuler au fond du contenant (3).

8. Chariot selon l'une quelconque des revendications précédentes, **caractérisé en ce que** le socle (4) est monté sur plusieurs roues (6) multidirectionnelles, de façon à rendre le chariot stable.

9. Chariot selon l'une quelconque des revendications précédentes, **caractérisé en ce que**, pour déclencher l'escamotage du socle (4) et faire rouler l'armature supérieure (2) dans le coffre, il est prévu un mécanisme de roues secondaires (RS), situé sous le fond de l'armature supérieure (2).

10. Chariot selon la revendication 9, **caractérisé en ce que** ledit mécanisme de roues secondaires (RS) sert également à déclencher un cran de sécurité qui provoque l'escamotage automatique sur action de l'utilisateur.

11. Chariot selon l'une quelconque des revendications précédentes, **caractérisé en ce qu'**il est prévu un amortisseur dans le socle (4), de façon à contribuer au confort de manipulation du chariot.

12. Chariot selon l'une quelconque des revendications 1 à 11, **caractérisé en ce que** des crochets de fixation (10) sont prévus sur l'armature' supérieure pour maintenir des sacs accessoires en position d'ouverture afin de pouvoir y déposer des achats effectués.

13. Chariot selon la revendication 12, **caractérisé en ce que** des pinces de fixation (40) sont prévues, chaque pince de fixation ayant une extrémité fixée sur le bord supérieur d'un sac de supermarché et l'autre extrémité fixée à un crochet de fixation (10).

14. Véhicule automobile, **caractérisé en ce qu'**il comporte un chariot de courses, qui peut être chargé plein dans le coffre dudit véhicule et qui est conforme à l'une quelconque des revendications 1 à 13.

15. Véhicule automobile selon la revendication 14, **caractérisé en ce que** le coffre du véhicule présente un fond inférieur (91) et un fond supérieur (9S), **en ce que** le fond supérieur (9S) comporte une rainure (13) permettant de loger l'axe du moyen de levage et de descente (5) de l'armature (2), et **en ce que** le socle (4) et les roues (6) sont rangées dans le fond inférieur (9I).

16. Véhicule automobile selon la revendication 14 ou 15, **caractérisé en ce qu'**il est prévu un ancrage à l'avant de l'armature supérieure pour le maintien selon la direction longitudinale du véhicule du chariot.

## Claims

1. A shopping trolley able to be loaded full in a boot of a motor vehicle, constituted by an upper frame (2) supporting a container (3) and a base (4) on wheels (6), the upper frame (2) being connected to the base (4) by means of a telescopic foot, so as to permit the deployment of the upper frame (2) above the base (4) in the position of use of the trolley and the retraction of the base (4) in the frame (2) in the storage position of the trolley in the boot of the vehicle, **characterized in that** the base (4) is shaped to receive and transport bulky or heavy objects.

2. The trolley according to Claim 1, **characterized in that** the means for raising and lowering the upper frame (2) with respect to the base (4) is constituted by at least one fluidic jack (5).

3. The trolley according to Claim 2, **characterized in that** the upper frame (2) comprises a handle (7) allowing the trolley to be pushed and allowing the fluidic jack (5) to be actuated for the deployment of the said frame (2) or the retraction of the base (4).

4. The trolley according to any one of Claims 1 to 3, **characterized in that** the upper frame (2) is entirely collapsible, so as to reduce the overall dimensions of the trolley in the boot of the vehicle.

5. The trolley according to any one of the preceding claims, **characterized in that** the vertical sides of the upper frame (2) are articulated substantially at mid-height by means of hinges, so as to permit the folding of the said upper frame (2).

6. The trolley according to any one of the preceding claims, **characterized in that** the container is made of flexible material.

7. The trolley according to any one of the preceding claims, **characterized in that** the container (3) is made from a fabric which is resistant and is sufficiently porous to facilitate the evacuation of dirt which could accumulate at the bottom of the container (3).

8. The trolley according to any one of the preceding claims, **characterized in that** the base (4) is mounted on several multidirectional wheels (6), so as to make the trolley stable.

9. The trolley according to any one of the preceding claims, **characterized in that**, to initiate the retraction of the base (4) and to cause the upper frame (2) to roll in the boot, a mechanism of secondary wheels (RS) is provided, situated beneath the bottom of the upper frame (2).

10. The trolley according to Claim 9, **characterized in that** the said mechanism of secondary wheels (RS) also serves to trigger a safety catch which causes the automatic retraction on an action by the user.

11. The trolley according to any one of the preceding claims, **characterized in that** a shock absorber is provided in the base (4), so as to contribute to the comfort of handling the trolley.

12. The trolley according to any one of Claims 1 to 11, **characterized in that** fixing hooks (10) are provided on the upper frame for holding accessory bags in an open position so as to be able to deposit therein the purchases which have been made.

13. The trolley according to Claim 12, **characterized in that** fixing clips (40) are provided, each fixing clip having one end fixed on the upper edge of a supermarket bag and the other end fixed to a fixing hook (10).

14. A motor vehicle, **characterized in that** it includes a shopping trolley which can be loaded full in the boot of the said vehicle and which is in accordance with any one of Claims 1 to 13.

15. The motor vehicle according to Claim 14, **characterized in that** the boot of the vehicle has a lower floor (91) and an upper floor (9S), **in that** the upper floor (9S) includes a groove (13) permitting the housing of the axis of the raising and lowering means (5) of the frame (2), and **in that** the base (4) and the wheels (6) are stored in the lower floor (91).

16. The motor vehicle according to Claim 14 or 15, **characterized in that** an anchor is provided at the front of the upper frame for the maintaining of the trolley along the longitudinal direction of the vehicle.

## Patentansprüche

1. Einkaufswagen, der voll geladen in einem Kraftfahrzeugkofferraum verstaut werden kann, der aus einer oberen Bewehrung (2) besteht, die einen Behälter (3) und einen Sockel (4) auf Rädern (6) trägt, wobei die obere Bewehrung (2) mit dem Sockel (4) über einen Teleskopfuß verbunden ist, so dass das Auffalten der oberen Bewehrung (2) oberhalb des Sockels (4) in Gebrauchsposition des Wagens und das Einfahren des Sockels (4) in die Bewehrung (2) in der Position des Verstauens des Wagens in dem Fahrzeugkofferraum gestattet werden, **dadurch gekennzeichnet, dass** der Sockel (4) ausgebildet ist, um sperrige oder schwere Objekte aufzunehmen und zu transportieren.

2. Wagen nach Anspruch 1, **dadurch gekennzeichnet, dass** das Hub- und Senkmittel der oberen Bewehrung (2) in Bezug zu dem Sockel (4) aus mindestens einem Flüssigkeitszylinder (5) besteht.

3. Wagen nach Anspruch 2, **dadurch gekennzeichnet, dass** die obere Bewehrung (2) einen Griff (7) aufweist, der es erlaubt, den Wagen zu schieben und den Flüssigkeitszylinder (5) für das Auffalten der Bewehrung (2) oder Einfahren des Sockels (4) zu betätigen.

4. Wagen nach einem der Ansprüche 1 bis 3, **dadurch gekennzeichnet, dass** die obere Bewehrung (2) komplett faltbar ist, so dass der Platzbedarf des Wagens in dem Kofferraum des Fahrzeugs verringert wird.

5. Wagen nach einem der vorhergehenden Ansprüche, **dadurch gekennzeichnet, dass** die vertikalen Flanken der oberen Bewehrung (2) im Wesentlichen auf mittlerer Höhe durch das Scharniermittel derart angelenkt sind, dass das Falten der oberen Bewehrung (2) gestattet wird.

6. Wagen nach einem der vorhergehenden Ansprüche, **dadurch gekennzeichnet, dass** der Behälter aus biegsamem Werkstoff hergestellt ist.

7. Wagen nach einem der vorhergehenden Ansprüche, **dadurch gekennzeichnet, dass** der Behälter (3) aus einem widerstandsfähigen und ausreichend porösen Stoff hergestellt ist, um das Ableiten von Verschmutzungen, der sich auf dem Boden des Behälters (3) ansammeln könnten, zu erleichtern.

8. Wagen nach einem der vorhergehenden Ansprüche, **dadurch gekennzeichnet, dass** der Sockel (4) auf mehrere Mehrrichtungsräder (6) montiert ist, um den Wagen stabil zu machen.

9. Wagen nach einem der vorhergehenden Ansprüche, **dadurch gekennzeichnet, dass** zum Auslösen des Einfahrens des Sockels (4) und um die obere Bewehrung (2) in dem Kofferraum rollen zu lassen, ein Nebenrädermechanismus (RS), der sich unter dem Boden der oberen Bewehrung (2) befindet, vorgesehen ist.

10. Wagen nach Anspruch 9, **dadurch gekennzeichnet, dass** der Nebenrädermechanismus (RS) auch zum Auslösen einer Sicherheitsraste dient, die das automatische Einfahren durch Einwirken des Benutzers hervorruft.

11. Wagen nach einem der vorhergehenden Ansprüche, **dadurch gekennzeichnet, dass** ein Dämpfer in dem Sockel (4) derart vorgesehen ist, dass zum Handhabungskomfort des Wagens beigetragen wird.

12. Wagen nach einem der Ansprüche 1 bis 11, **dadurch gekennzeichnet, dass** Befestigungshaken (10) auf der oberen Bewehrung zum Halten der Zubehörsäcke in Öffnungsposition vorgesehen sind, um darin die getätigten Einkäufe abzulegen.

13. Wagen nach Anspruch 12, **dadurch gekennzeichnet, dass** Befestigungszangen (40) vorgesehen sind, wobei jede Befestigungszange ein Ende hat, das auf dem oberen Rand einer Supermarkttasche befestigt ist und das andere Ende an einem Befestigungshaken (10) befestigt ist.

14. Kraftfahrzeug, **dadurch gekennzeichnet, dass** es einen Einkaufswagen aufweist, der voll in dem Kofferraum des Fahrzeugs verstaut werden kann, und der einem der Ansprüche 1 bis 13 entspricht.

15. Kraftfahrzeug nach Anspruch 14, **dadurch gekennzeichnet, dass** der Kofferraum des Fahrzeugs einen unteren Boden (91) und einen oberen Boden (9S) aufweist, und dass der obere Boden (9S) eine Rille (13) aufweist, die es erlaubt, die Achse des Hub- und Senkmittels (5) der Bewehrung (2) aufzunehmen, und dass der Sockel (4) und die Räder (6) in dem unteren Boden (91) verstaut sind.

16. Kraftfahrzeug nach Anspruch 14 oder 15, **dadurch gekennzeichnet, dass** eine Verankerung an der Vorderseite der oberen Bewehrung für das Halten des Wagens entlang der Längsrichtung des Fahrzeugs vorgesehen ist.
